Europäisches Patentamt

European Patent Office

Office européen des brevets

(11) Publication number: **0 150 919**
A2

# EUROPEAN PATENT APPLICATION

(21) Application number: 85300117.0

(51) Int. Cl.⁴: **B 01 D 23/24,** B 01 D 23/10

(22) Date of filing: 08.01.85

(30) Priority: 12.01.84 GB 8400740

(43) Date of publication of application: 07.08.85
Bulletin 85/32

(84) Designated Contracting States: **AT BE CH DE FR GB IT
LI NL SE**

(71) Applicant: **WATER RESEARCH CENTRE, P.O.
Box 16 Henley Road Medmenham, Marlow
Buckinghamshire SL7 2HD (GB)**

(72) Inventor: **Zabel, Thomas Franz Otto, 5 Beaufort Close,
Marlow Buckinghamshire (GB)**

(74) Representative: **Wain, Christopher Paul et al, A.A.
THORNTON & CO. Northumberland House 303-306 High
Holborn, London WC1V 7LE (GB)**

(54) Method and apparatus for the control of filter backwashing.

(57) Filter backwashing is controlled to avoid the loss of filter medium (6) by providing one or more sensors (14) in the filter vessel (1) to indicate the level of the expanded filter bed during backwashing, and controlling the backwash liquid flow accordingly to maintain the expanded bed at an optimum level (EH).

EP 0 150 919 A2

- 1 -

## METHOD AND APPARATUS FOR THE
## CONTROL OF FILTER BACKWASHING

This invention relates to a method and apparatus for the control of filter backwashing.

Filtration is the most widely used unit process in water treatment besides disinfection. In filtration, the water is passed through a granular filtration medium consisting of either sand, granular activated carbon, or combinations of different granular materials. Several mechanisms play a part in filtration including straining, which occurs mainly at the top of a filter bed with the formation of a mat, and deposition within the filter bed which leads to clogging. The rate of filtration governs which mechanism predominates. When the filtration rate is slow, straining with the formation of a mat, the so-called Schmutzdecke, predominates whereas for high rate filtration clogging is the main filtration mechanism.

The progressive build-up of either the mat or clogging leads to an increasing headloss build-up across the filter medium which means that a progressively higher head of water above the filter is required to maintain the flow through the filter. The maximum headloss available for filtration is limited by the physical structure of the filter. When the maximum headloss is reached, the filter requires cleaning which, for slow sand filters, is approximately every 2 to 6 weeks whereas for rapid filters can be as often as every 4 hours or more usually at intervals in excess of 24 hours.

Slow sand filters, operating commonly between 0.1 and 0.3 m/h filtration rates, are usually cleaned by removing the top 1" of the sand and replacing it with clean sand. Rapid granular filters, operating commonly at filtration rates of approximately 6 m/h, are cleaned by backwashing with water preceded usually by air scouring to break-up the filter bed. Efficient backwashing requires a bed expansion of between 10 and 20% although, in the USA, 50% bed expansion is commonly used.

The bed expansion depends on the particle size, the type of material used as filter medium, the backwash rate and the temperature of the backwash water. To compensate for the effect of temperature, the backwash rate has to be increased if the temperature of the backwash water increases to maintain the same bed expansion.

Rapid filtration can be carried out in open filters or inside pressure shells. The bed expansion can be checked relatively easily in open filters once the material freed during backwashing has been removed with the backwash water and the backwash water is clear. However, in pressure filter shells it is impossible to check the bed expansion, and therefore these filters are often not backwashed adequately. When granular activated carbon is used as filter medium backwashing is even more critical to control the backwash rate than for sand filtration as the density of the material is much lower and it is relatively easy to lose the filter material during backwashing.

We have now devised a method of controlling the backwashing of rapid filters. It is especially applicable for pressure filters where the backwashing cannot be observed directly, but can also be applied to filtration in open filter shells, particularly for granular activated carbon filters to avoid media loss and for sand or multi media filters to maintain bed expansion at all temperatures.

According to the invention, one or more sensors are used to monitor the level of the media in the filter during backwashing. The output from the sensor(s) is preferably utilised directly to control the backwash rate to achieve the optimum backwash conditions.

In one embodiment of the invention, a single sensor is used which is positioned above the normal level of the filter bed at or slightly above the maximum height to which the bed should expand during backwashing. The sensor will thus provide a signal, during backwashing, when the filter bed expands to (or slightly beyond) this maximum height and the signal from the sensor can then be used to control the backwash rate to keep the bed in its optimum expanded condition.

As will be clear to those skilled in the art, two or more sensors can be used. For example, there may be a lower sensor to control the backwashing and an upper sensor to act as a safety device in the event of a fault developing in the lower sensor.

The sensor(s) may be arranged to control a filter backwash pump or a filter backwash control valve, for example.

There are a number of different sensors which are suitable for use in the present invention, but we prefer to use ultrasonic or infra-red sensors.

The invention also includes filter apparatus which comprises at least one sensor for monitoring the filter bed expansion during backwashing.

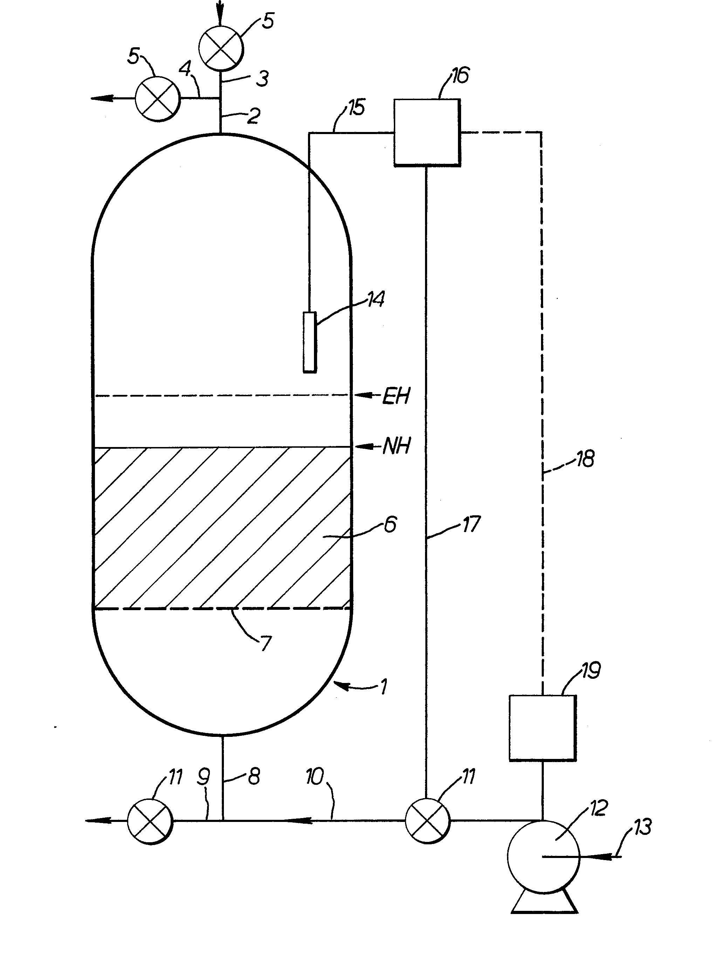

In order that the invention may be more fully understood, reference is made to the accompanying drawing which shows, schematically, one embodiment of the invention as applied to a pressure filter.

Referring to the drawing, there is shown a closed pressure filter vessel 1 (illustrated in schematic vertical section). Entering the top of the vessel 1 is a line 2 which branches into two branch lines 3,4 each of which includes a valve 5. Inside vessel 1 is filter medium 6 which is supported (by a grid or mesh 7) above the bottom of vessel 1. Opening into the bottom of vessel 1 is line 8 which branches to branch lines 9,10 each of which has a valve 11. Beyond its valve 11, line 10 is connected to pump 12 which is connected via line 13 to a source (not shown) of backwash liquid.

Mounted within vessel 1, above the normal height "NH" of the bed of filter medium 6, is a sensor 14. The sensor is connected electrically (wire 15) to a control unit 16. Unit 16 is connected by wire 17 to valve 11 to control the opening and closing thereof. It could alternatively (or also) be connected (discontinuous line 18) to a pump speed controller 19.

The apparatus is operated as follows. Valve 5 on line 4 is closed, and liquid to be filtered is passed into vessel 1 via lines 3 and 2. The liquid passes under gravity through the medium 6 and support 7 to exit via line 8. Line 10 is closed (by its valve 11) but valve 11 in line 9 is open, and the filtered liquid passes therealong for subsequent use.

After a period of time, the bed of medium 6 will require cleaning and this is effected by vigorous backwashing. Valve 5 in line 3 is closed and valve 5 in line 4 is opened. Also, valve 11 in line 9 is closed and valve 11 in line 10 is opened. Pump 12 is energised and backwash liquid is pumped along lines 10 and 8 into the bottom of vessel 1. The liquid floods up through vessel 1, causing the bed of medium 6 to expand, the debris therein being dislodged and carried away in the backwash water. The rising backwash water leaves vessel 1 through lines 2 and 4 (either to waste or for use in some other way).

As the bed expands, its upper level moves towards sensor 14. This sensor is mounted just above a level "EH" which is the optimum height of the expanded bed. Thus, if the bed rises above level "EH", the sensor signals the control 16 which, in turn, begins to close valve 11 of line 10 (or slow pump 12 via controller 19) to reduce the flow of backwash liquid and thus allow the bed to return to the optimum level EH. Thus, over-expansion of the bed which would ordinarily lead to loss of filter medium, is detected and corrected.

- 6 -

CLAIMS:

1.      A method of backwashing a rapid filter bed which comprises back-flushing  a wash liquid through the bed to expand the bed and remove debris therefrom, characterised in that the expansion of the bed is detected and the back-flushing controlled to maintain the expansion at or below a predetermined maximum.

2.      A method according to claim 1, wherein the rapid filter bed is in a pressure filter shell, characterised in that at least one sensor is provided in the shell at a level above the top of the bed corresponding to the height of the expanded bed, and wherein the back-flushing conditions are controlled, in dependence on signals from said sensor, to maintain the height of the expanded bed at or close to said level.

3.      A method according to claim 1 or 2, wherein the filter medium comprises granular activated carbon characterised in that back-flushing is controlled to prevent any significant loss of said filter medium.

4.      A method according to claim 1 or 2, wherein the bed comprises sand and/or another medium, characterised in that control of back-flushing is achieved at different temperatures.

5.      A method according to claim 2, characterised in that the output from at least one sensor is used to control a backwash pump or control valve or both.

6.      A method according to claim 2 or 5, wherein the or each sensor is an ultrasonic or infra-red sensor.

7.       A rapid filter bed apparatus which comprises a vessel for containing a bed of rapid filter medium, means for supplying liquid to said bed to be filtered and means for removing filtered liquid from said bed;  means for backwashing the bed to expand it and remove debris therefrom;  characterised in that said vessel also includes at least one sensor mounted at a predetermined height above the normal level of the bed, to provide a signal indicative of bed expansion to said height during backwashing.

8.       Apparatus according to claim 7, wherein said vessel is a closed shell pressure filter, and said apparatus further includes a pump for backwashing, characterised in that said pump is controlled in dependence on signals from said sensor.

1/1